# EUROPÄISCHE PATENTSCHRIFT

(11) **EP 0 637 726 B1**
(45) Veröffentlichungstag und Bekanntmachung des Hinweises auf die Patenterteilung: **18.06.1997**
(21) Anmeldenummer: 94111533.9
(22) Anmeldetag: 23.07.1994
(51) Int. Cl.: F26B 3/12, B01D 1/18

(54) **Vorrichtung zum Kühlen von Gasen und ggf. Trocknen von dem Gas zugegebenen Feststoffteilchen**
Apparatus for cooling gases and optionally for drying particulate solids contained in the gas
Dispositif de refroidissement des gaz et éventuellement pour sécher de particules solides contenus dans le gaz

(30) Priorität: 03.08.1993 DE 4325968
(43) Veröffentlichungstag der Anmeldung: 08.02.1995
(73) Patentinhaber: DEUTSCHE BABCOCK ANLAGEN GMBH, 46049 Oberhausen (DE)
(72) Erfinder: Ruscheweyh, Hans, Prof. Dr.-Ing., D-52074 Aachen (DE)
(74) Vertreter: Müller, Jürgen, Dipl.-Ing.

(56) Entgegenhaltungen:
- DE-A- 3 229 843
- FR-A- 1 163 735
- US-A- 4 187 617
- "Führer durch die Strömungslehre"; Prandtl, Oswatitsch, Wieghardt; Fried. Vieweg + Sohn GmbH, Braunschweig; 7. Auflage, 1969.

## Beschreibung

Die Erfindung betrifft eine Vorrichtung zum Kühlen von Gasen und gegebenenfalls Trocknen von dem Gas zugegebenen Feststoffteilchen, insbesondere Verdampfungskühler und Sprühtrockner.

Derartige Vorrichtungen sind beispielsweise aus DE-A-32 29 843 bekannt. Sie umfassen ein senkrecht angeordnetes Reaktorgehäuse, dem das Gas in senkrechter Richtung durch mindestens eine als Stoßdiffusor ausgebildete Zuleitung zugeführt wird und das in senkrechter Richtung durchströmt wird, wobei dem Gas nach seinem Eintritt in das Reaktorgehäuse Flüssigkeit und gegebenenfalls Feststoffpartikel durch mindestens eine Düse zugeführt werden. Durch Verdampfen der Flüssigkeit wird dem Gas Verdunstungswärme entzogen, so daß dieses gekühlt wird. Sofern in der zugeführten Flüssigkeit zusätzlich Feststoffteilchen enthalten sind, werden diese beim Durchströmen des Reaktorgehäuses getrocknet.

Die bekannten, als Verdampfungskühler oder Sprühtrockner ausgebildeten Vorrichtungen der voranstehend beschriebenen Art haben den Nachteil, daß der Gasstrom nicht nur mit über den Querschnitt der Zuleitung ungleichmäßigem Geschwindigkeitsprofil in das Reaktorgehäuse eintritt, sondern abhängig vom Zuleitungsverlauf auch mit von der Mittelachse des Reaktorgehäuses abweichender Strömungsrichtung. Hierdurch ergeben sich innerhalb des Reaktorgehäuses Flüssigkeits- und Temperatursträhnen, die zu einem größeren Bauvolumen und einem geringeren Wirkungsgrad der Vorrichtung führen. Bei der Zugabe von Feststoffteilchen besteht bei den bekannten Vorrichtungen insbesondere aufgrund der seitlichen Ablenkung das Gasstromes die Gefahr von Ablagerungen an den Seitenwänden, die dazu führen, daß das Reaktorgehäuse in verhältnismäßig kurzen Zeitabständen gereinigt werden muß, womit häufigere Stillstandszeiten der Vorrichtung verbunden sind.

Bei der aus der DE-A-32 29 843 bekannten Vorrichtung wird durch in einem ringförmigen, die Eindüsung umgebenden Strömungsquerschnitt angeordnete Flügel der Strömung ein Drall aufgezwungen, der fälschlicherweise als Wirbelströmung bezeichnet wird. Diese Drallströmung vergrößert zwar den Strömungsweg, bewirkt aber keine intensive Vermischung zwischen dem Gas und den mit Hilfe von Flüssigkeit eingedüsten Feststoffteilchen. Der Drall wird durch gekrümmte oder schräggestellte Leitflächen der mit rechtwinklig zur Hauptströmungsrichtung verlaufenden Vorderkanten versehenen Schaufeln erzeugt, wie dies ebenfalls bei Leitschaufeln der Fall ist, wie sie aus der FR-A-1 163 735 bekannt sind. Eine Aufhebung von Temperatur- und Konzentrationssträhnen im Bereich der Gaszuführung ist mit den bekannten Vorrichtungen nicht möglich.

Der Erfindung liegt die **Aufgabe** zugrunde, eine Vorrichtung der eingangs beschriebenen Art zum Kühlen von Gasen und gegebenenfalls Trocknen von dem Gas zugegebenen Feststoffteilchen zu schaffen, bei der mit möglichst geringem Bauaufwand die voranstehend beschriebenen Nachteile dadurch vermieden werden, daß der Gasstrom unabhängig vom Verlauf der Zuleitung gleichmäßig und parallel zur Längsmittelachse dem Reaktorgehäuse zugeführt wird, und die mit geringen Strömungsverlusten eine intensive Vermischung zwischen dem Gas und der Flüssigkeit und gegebenenfalls der Feststoffteilchen auf kurzer Wegstrecke bewirkt.

Die **Lösung** dieser Aufgabenstellung durch die Erfindung ist in Verbindung mit der als Stoßdiffusor ausgebildeten Zuleitung dadurch gekennzeichnet, daß im Bereich des Stoßdiffusors mindestens eine ein Vorderkantenwirbelsystem erzeugende Wirbeleinbaufläche angeordnet ist (zum Begriff "Vorderkantenwirbelsystem" siehe z.B. "Führer durch die Strömungslehre" ; L. Prandtl, K. Oswatitsch, K. Wieghardt ; Friedr. Vieweg + Sohn GmbH, Braunschweig ; 7. Auflage ; 1969 ; Seiten 375 und 376).

Durch die erfindungsgemäße Ausbildung entsteht ringförmig um den Eintritt des Gases in das Reaktorgehäuse ein gleichmäßiges Druckfeld, das eine seitliche Ablenkung des Gasstromes verhindert und eine zentrische Ausrichtung des Gasstromes zur Längsmittellinie des Reaktorgehäuses bewirkt, wobei die ein Vorderkantenwirbelsystem erzeugenden Wirbeleinbauflächen im Bereich des Stoßdiffusors für eine intensive und schnelle, d.h. auf kurzer Weglänge erfolgende Vermischung von Gas und Flüssigkeit und gegebenenfalls Feststoffteilchen sorgen, so daß der Kühl- und Trocknungseffekt bereits nach kurzer Strecke abgeschlossen ist. Da die jeweils ein Vorderkantenwirbelsystem erzeugenden Einbauflächen verlustarm arbeiten und nur einen geringen Bauaufwand erfordern, ist die erfindungsgemäße Weiterbildung nicht mit größeren Investitionskosten verbunden. Auch bestehende Vorrichtungen zum Kühlen von Gasen und gegebenenfalls zum Trocknen von dem Gas zugegebenen Feststoffteilchen können gemäß dem Vorschlag der Erfindung umgerüstet werden.

Mit dieser erfindungsgemäßen Weiterbildung der bekannten Vorrichtung wird der Vorteil erreicht, daß trotz ungleichförmigem Strömungsprofil in der Zuleitung eine stabile und gleichmäßige sowie zentrische Verteilung des gegebenenfalls mit Feststoffteilchen beladenen Gases auf den gesamten Strömungsquerschnitt des Reaktorgehäuses erfolgt, wobei gleichzeitig eine Beaufschlagung der Reaktorwände mit Flüssigkeits- und Feststoffteilchen vermieden wird. Der sich durch den erfindungsgemäßen Vorschlag ergebende bessere Wirkungsgrad der Vorrichtung ermöglicht gleichzeitig, das Bauvolumen des Reaktorgehäuses zu verringern, so daß die Vorrichtung preiswerter hergestellt werden kann. Weiterhin wird der Wartungsaufwand durch Wegfall der bisher periodisch notwendigen Reinigung verringert. Schließlich entfallen die bisher wegen der Notwendigkeit der periodischen Reinigung auftretenden Stillstandszeiten.

Die Wirbeleinbauflächen können nicht nur im Bereich des Stoßdiffusors, sondern zusätzlich auch in Strömungsrichtung hinter dem Stoßdiffusor im Reaktorgehäuse angeordnet sein.

Gemäß einer bevorzugten Ausführungsform der Erfindung werden die Düsen zur Zufuhr von Flüssigkeit und gegebenenfalls Feststoffteilchen im Wirkungsbereich der Wirbeleinbauflächen angeordnet, wodurch die Beimischung der Flüssigkeit bzw. der Feststoffteilchen in den Gasstrom optimiert wird.

Auf der Zeichnung sind zwei Ausführungsbeispiele der erfindungsgemäßen Vorrichtung dargestellt, und zwar zeigen:
- Fig. 1: einen schematischen senkrechten Längsschnitt durch ein erstes, als Sprühtrockner ausgebildetes Ausführungsbeispiel,
- Fig. 2: einen der Fig. 1 entsprechenden Längsschnitt durch den oberen Teil eines zweiten, als Verdampfungskühler ausgebildeten Ausführungsbeispiels,
- Fig. 3: einen Querschnitt gemäß der Schnittlinie III-III in Fig. 2,
- Fig. 4 bis 7: vier verschiedene Ausführungsbeispiele für die Ausbildung der Wirbeleinbauflächen und
- Fig. 8 und 9: Querschnitte durch derartige Wirbeleinbauflächen.

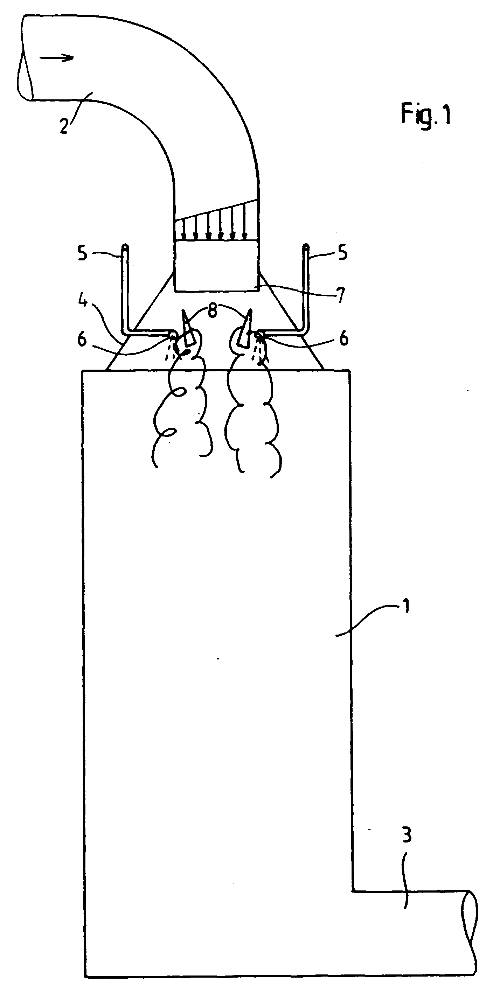

Der in Fig. 1 schematisch dargestellte Sprühtrockner hat ein senkrechtstehend angeordnetes Reaktorgehäuse 1, dem das zu kühlende Gas von oben her durch eine Zuleitung 2 zugeführt wird. Am unteren Ende des Reaktorgehäuses 1 wird das gekühlte Gas durch eine Ableitung 3 abgeführt.

Die waagerecht ankommende, anschließend bogenförmig verlaufende und mittig von oben an das Reaktorgehäuse 1 angeschlossene Zuleitung 2 mündet beim dargestellten Ausführungsbeispiel nach Fig. 1 in einem sich trichterförmig erweiternden Gehäuseaufsatz 4. Im Bereich dieses Gehäuseaufsatzes 4 wird dem zu kühlenden Gasstrom Flüssigkeit zugeführt, die durch ihre Verdunstung eine Kühlung des Gases bewirkt. In Fig. 1 sind mehrere, am Ende von Flüssigkeitsleitungen 5 angeordnete Flüssigkeitsdüsen 6 schematisch eingezeichnet. In diesen Flüssigkeitsstrom können Feststoffteilchen eingegeben sein.

Durch den bogenförmigen Verlauf der Zuleitung 2 ergibt sich vor dem Eintreten des Gasstromes in das Reaktorgehäuse ein über den Querschnitt der Zuleitung 2 ungleichförmiges Geschwindigkeitsprofil, das in Fig. 1 eingezeichnet ist. Hierdurch würde sich nicht nur eine Abweichung der Strömungsrichtung des Gasstromes von der Mittelachse des Reaktorgehäuses 1 ergeben, sondern auch das Entstehen von Flüssigkeits- und Temperatursträhnen innerhalb des Reaktorgehäuses 1. Um dies zu vermeiden, ist die Mündung der Zuleitung 2 als Stoßdiffusor 7 ausgebildet. Beim Ausführungsbeispiel nach Fig. 1 erfolgt diese Ausbildung durch die Anordnung eines kreiszylindrischen Ringes, der in Verlängerung der Zuleitung 2 in den trichterförmigen Gehäuseaufsatz 4 hineinragt. Durch diesen Stoßdiffusor 7 entsteht ringförmig um den Eintritt des Gases in das Reaktorgehäuse 1 ein gleichmäßiges Druckfeld, das trotz des ungleichmäßigen Geschwindigkeitsprofils des eintretenden Gasstromes eine seitliche Ablenkung des Gasstromes verhindert und eine zentrische Ausrichtung des Gasstromes zur Längsmittellinie des Reaktorgehäuses 1 bewirkt.

Um eine intensive und schnelle, d.h. auf kurzer Weglänge erfolgende Vermischung des in das Reaktorgehäuse 1 eintretenden Gases und der diesem Gas durch die Flüssigkeitsdüsen 6 zugegebenen Flüssigkeit und gegebenenfalls auch Feststoffteilchen zu erzielen, sind im Bereich des Stoßdiffusors 7 Wirbeleinbauflächen 8 angeordnet, die jeweils ein Vorderkantenwirbelsystem erzeugen. Bei diesem Vorderkantenwirbelsystem handelt es sich um einen statischen Wirbelnachlauf, der mit geringen Wirbelverlusten aufgrund der Strömungskomponenten quer zur Hauptströmungsrichtung eine intensive Durchmischung erzielt und hierdurch das Entstehen von Temperatur- und Geschwindigkeitssträhnen verhindert. Auf diese Weise ist der Kühl- und Trocknungseffekt der zugeführten Flüssigkeit und der dem Gasstrom zugegebenen Feststoffteilchen bereits nach kurzer Strecke abgeschlossen, wodurch die Bauhöhe des Reaktorgehäuses 1 verkürzt werden kann. Die mit ihrer Oberfläche im spitzen Winkel zur Hauptströmungsrichtung des Gases angeordneten Wirbeleinbauflächen 8 haben nur eine vernachlässigbar kleine Verringerung des Strömungsquerschnittes zur Folge, so daß die durch ihren Einbau entstehenden Strömungsverluste gering sind. Außerdem erfordern derartige Wirbeleinbauflächen 8 nur einen geringen Bauaufwand.

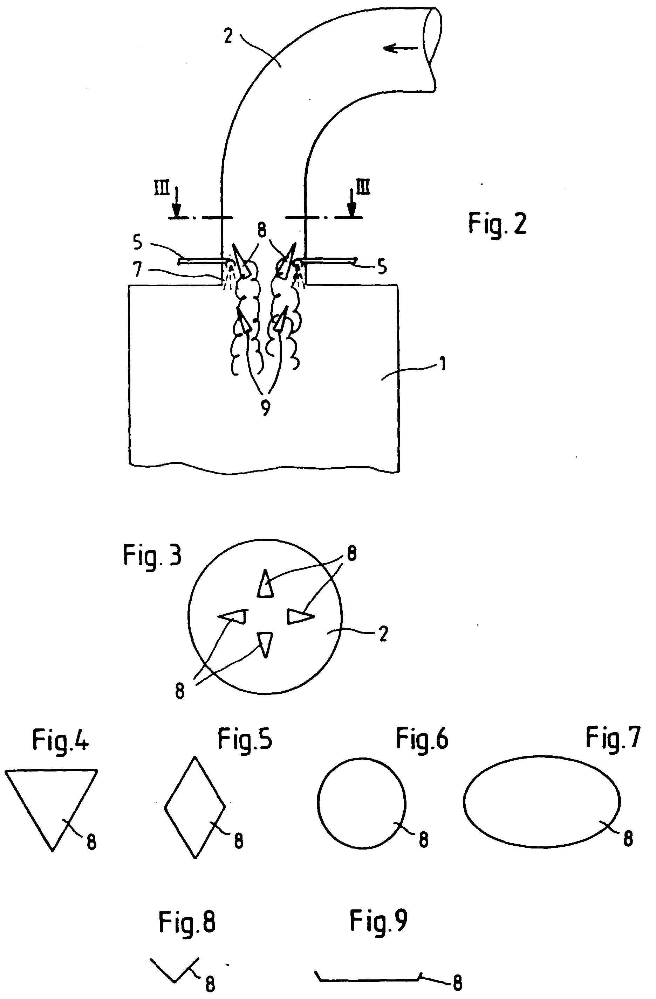

In den Fig. 4 bis 9 sind Ausführungsbeispiele derartiger Wirbeleinbauflächen dargestellt. Die Fig. 4 zeigt eine in der Grundform dreieckige Wirbeleinbaufläche 8, die mit ihrer Spitze entgegengesetzt zur Hauptströmungsrichtung angeordnet wird. Die in Fig. 5 dargestellte Wirbeleinbaufläche 8 ist rautenförmig ausgebildet und wird ebenfalls mit einer ihrer Spitzen entgegengesetzt zur Strömungsrichtung und unter einem spitzen Winkel zur Hauptströmungsrichtung angestellt im Bereich des Stoßdiffusors 7 angeordnet. Die Fig. 6 und 7 zeigen in der Grundform kreisförmige bzw. ovale Wirbeleinbauflächen 8. Auch diese Wirbeleinbauflächen 8 werden unter einem spitzen Winkel zur Hauptströmungsrichtung im Gasstrom angeordnet und bewirken durch ihre angeströmte Vorderkante das Entstehen von Vorderkantenwirbelsystemen.

Um die Intensität des Mischwirbelsystems weiterhin zu erhöhen und die statische Stabilität der im Gasstrom liegenden Wirbeleinbauflächen 8 zu verbessern, können diese gemäß Fig. 8 profiliert, beispielsweise im Querschnitt V-förmig ausgebildet sein. Gemäß Fig. 9 wird eine Stabilisierung der Wirbeleinbauflächen 8 auch dadurch erreicht, daß sie mit einem abgewinkelten Rand versehen werden.

Um eine schnelle Zumischung der Flüssigkeit in den Gasstrom zu bewirken, sind die Flüssigkeitsdüsen 6 im Wirkungsbereich der Wirbeleinbauflächen 8 angeordnet, wie dies in Fig. 1 erkennbar ist. Die Fig. 1 zeigt weiterhin, daß ein Umbau vorhandener Sprühtrockner ohne weiteres möglich ist, indem in den Gehäuseaufsatz 4 ein Stoßdiffusor 7 und Wirbeleinbauflächen 8 eingebaut werden.

Das zweite Ausführungsbeispiel nach den Fig. 2 und 3 zeigt, daß eine Ausbildung des Stoßdiffusors 7 auch durch entsprechende Ausbildung des Überganges zwischen der Zuleitung 2 und dem Reaktorgehäuse 1 möglich ist. Durch den in Fig. 2 gezeichneten rechtwinkligen Übergang zwischen Zuleitung 2 und Oberseite des Reaktorgehäuses 1 entsteht zwangsläufig ein Stoßdiffusor 7, in dessen Bereich die Wirbeleinbauflächen 8 angeordnet werden können. Der Querschnitt in Fig. 3 zeigt eine Anordnungsmöglichkeit für insgesamt vier derartige Wirbeleinbauflächen 8 mit dreieckförmiger Grundform.

Beim zweiten Ausführungsbeispiel nach Fig. 2 sind in Strömungsrichtung hinter dem Stoßdiffusor 7 weitere Wirbeleinbauflächen 9 angeordnet, die durch ihre Vorderkantenwirbelsysteme den Mischeffekt verbessern und die Mischstrecke weiter verkürzen.

### Bezugszeichenliste

- 1: Reaktorgehäuse
- 2: Zuleitung
- 3: Leitung
- 4: Gehäuseaufsatz
- 5: Flüssigkeitsleitung
- 6: Flüssigkeitsdüse
- 7: Stoßdiffusor
- 8: Wirbeleinbaufläche
- 9: Wirbeleinbaufläche

## Patentansprüche

1. Vorrichtung zum Kühlen von Gasen und gegebenenfalls Trocknen von dem Gas zugegebenen Feststoffteilchen, insbesondere Verdampfungskühler und Sprühtrockner, mit einem senkrecht angeordneten Reaktorgehäuse (1), dem das Gas in senkrechter Richtung durch mindestens eine als Stoßdiffusor (7) ausgebildete Zuleitung (2) zugeführt und das in senkrechter Richtung durchströmt wird, wobei dem Gas nach seinem Eintritt in das Reaktorgehäuse (1) Flüssigkeit und gegebenenfalls Feststoffteilchen durch mindestens eine Düse (6) zugeführt werden,
**dadurch gekennzeichnet**,
daß im Bereich des Stoßdiffusors (7) mindestens eine ein Vorderkantenwirbelsystem erzeugende Wirbeleinbaufläche (8) angeordnet ist.

2. Vorrichtung nach Anspruch 1, dadurch gekennzeichnet, daß zusätzlich in Strömungsrichtung hinter dem Stoßdiffusor (7) Wirbeleinbauflächen (9) im Reaktorgehäuse (1) angeordnet sind.

3. Vorrichtung nach Anspruch 1 oder 2, dadurch gekennzeichnet, daß die Düsen (6) zur Zufuhr von Flüssigkeit und gegebenenfalls Feststoffteilchen jeweils im Wirkungsbereich einer Wirbeleinbaufläche (8) angeordnet sind.

## Claims

1. Device for the cooling of gases and, in a given case, drying of solid substance particles added to the gas, in particular evaporation cooler and spray drier, with a vertically arranged reactor housing (1), to which the gas is fed in vertical direction through at least one feed duct (2) constructed as collision diffuser (7) and which is flowed through in vertical direction, wherein liquid and, in a given case, solid substance particles are fed through at least one nozzle (6) to the gas after its entry into the reactor housing (1), characterised thereby, that at least one whirl baffle (8) producing a front edge turbulence system is arranged in the region of the collision diffuser (7).

2. Device according to claim 1, characterised thereby, that whirl baffles (9) are additionally arranged in the reactor housing (1) in flow direction behind the collision diffuser (7).

3. Device according to claim 1 or 2, characterised thereby, that the nozzles (6) for the feed of liquid and, in a given case, solid substance particles are each arranged in the range of action of a whirl baffle (8).

## Revendications

1. Dispositif de refroidissement de gaz et, le cas échéant, de séchage de particules solides ajoutées au gaz, plus particulièrement refroidisseur par évaporation et sécheur par pulvérisation, avec carter de réacteur (1) disposé verticalement, auquel le gaz est amené suivant ce sens vertical à l'aide d'au moins une conduite d'amenée (2) réalisée sous forme de diffuseur par impulsion (7) et un écoulement de liquide traversant le carter verticalement, et, le cas échéant, des particules solides étant amenés par au moins une buse (6), pour être mélangées au gaz après son entrée dans le carter de réacteur (1),
caractérisé en ce que :
dans la zone du diffuseur par impulsion (7) est disposée au moins une surface à garnissage tourbillonnant (8) générant un système tourbillonnaire sur les arêtes avant.

2. Dispositif selon la revendication 1, caractérisé en ce que des surfaces de garnissage tourbillonnant (9) montées dans le réacteur de carter (1) sont disposées en plus, derrière le diffuseur par impulsion (7), dans le sens de l'écoulement.

3. Dispositif selon la revendication 1 ou 2, caractérisé en ce que les buses (6) destinées à l'amenée de liquide et, le cas échéant, de particules solides sont respectivement disposées dans la zone d'action d'une surface de garnissage tourbillonnaire (8).
